# EUROPÄISCHE PATENTANMELDUNG

(11) **EP 0 662 497 A1**
(43) Veröffentlichungstag der Anmeldung: **12.07.1995**
(21) Anmeldenummer: 94119954.9
(22) Anmeldetag: 16.12.1994
(51) Int. Cl.: C09B 19/02, C09B 48/00, C09B 67/20, C09B 67/22

(54) **Verwendung von Fettsäuretauriden zum Dispergieren polycyclischer Pigmente**

(30) Priorität: 07.01.1994 DE 4400329
(71) Anmelder: HOECHST AKTIENGESELLSCHAFT, D-65929 Frankfurt am Main (DE)
(72) Erfinder: Urban, Manfred, Dipl.-Ing., D-65205 Wiesbaden (DE); Dietz, Erwin, Dr., Wilmington, DE 19808 (US)

(57) **Zusammenfassung**

Durch die Verwendung eines Fettsäuretaurids der allgemeinen Formel (I)

R¹-CO-NR²-(CH₂)ₙ-SO₃⁻M⁺ (I)

in welcher
R¹ eine geradkettige oder verzweigte Alkylgruppe mit 10 bis 24 Kohlenstoffatomen und
R² ein Wasserstoffatom oder eine C₁-C₆-Alkylgruppe darstellen,
M⁺ ein Wasserstoff-, Ammonium-, Alkali- oder Erdalkalimetallion bedeutet und n die Zahl 1 oder 2 ist, oder einer Mischung aus mindestens zwei Fettsäuretauriden der Formel (I) werden leicht dispergierbare polycyclische Pigmente aus der Klasse der Chinacridone und Dioxazine hergestellt.

## Beschreibung

Die vorliegende Erfindung betrifft die Herstellung farbstarker und leicht dispergierbarer polycyclischer Pigmente aus der Klasse der Chinacridone und Dioxazine.

Bei der Einarbeitung von Pigmenten in hochmolekulare Materialien werden an Pigmente hohe Anforderungen gestellt. Zur Erzielung hoher Farbstärke müssen die feinteiligen Pigmente leicht dispergierbar sein und sich leicht in das Anwendungsmedium einarbeiten lassen. Diese Forderung ist um so schwerer zu erfüllen, je feinteiliger ein Pigment ist und in je mehr Anwendungsgebieten das Pigment eingesetzt wird. So kann in einigen Anwendungsmedien die Dispergierung unvollständig bleiben, und die optimale Farbstärke wird nicht erreicht.

Es ist bekannt, daß man Pigmente mit oberflächenaktiven Mitteln behandeln kann, um ihre anwendungstechnischen Eigenschaften zu verbessern. Um dies zu erreichen, werden gemäß der DE-A-2 152 485 die Pigmente mit einer alkalischen Lösung eines Alkylarylsulfonats oder Alkylphenolpolyglykolethersulfats behandelt, anschließend angesäuert und isoliert. Die dabei erhaltenen Pigmente sind nur geeignet zum Pigmentieren von Lacken und Anstrichfarben, so daß ihre Verwendung deutlich eingeschränkt ist. Darüberhinaus ist die Verwendung von oberflächenaktiven Mitteln auf phenolischer Basis für einige Einsatzgebiete aus ökologischen Gründen nicht mehr akzeptabel.

Als Zusatz zur Verbesserung der anwendungstechnischen Eigenschaften von Perylenpigmenten wird eine Reihe von oberflächenaktiven Substanzen, wie auch Fettsäuretauride, vorgeschlagen. Die Anwendung der erhaltenen Perylenpigmente beschränkt sich jedoch auf das Lackgebiet.

Die EP-A-0 088 392 beschreibt die Herstellung von Perylentetracarbonsäure-N,N'-dimethylimidpigmenten. Bei der Herstellung dieser Pigmente werden als oberflächenaktive Mittel bevorzugt Harzseifen und quarternäre Ammoniumsalze eingesetzt.

Hierbei werden transparente Pigmente erhalten, die bevorzugt in Metalliclacken eingesetzt werden. Beim Einsatz von Fettsäuretauriden werden deckende Pigmente erhalten, die jedoch für das geforderte Einsatzgebiet nicht geeignet sind.

Bislang werden durch den Zusatz bestimmter oberflächenaktiver Mittel geeignete Pigmente nur für bestimmte Anwendungsgebiete erhalten. Bei Chinacridon- und Dioxazinpigmenten war der Einsatz eines einzigen oberflächenaktiven Mittels für verschiedene Anwendungsgebiete bislang nicht erfolgreich. Es bestand das Bedürfnis, leicht dispergierbare, toxikologisch unbedenkliche Pigmentpräparationen der genannten Art herzustellen, die in verschiedenen Anwendungsgebieten leicht dispergierbar, flockungsstabil und verträglich sind.

Es wurde gefunden, daß die genannte Aufgabe überraschenderweise durch Verwendung eines oder mehrerer Fettsäuretauride gelöst werden kann.

Gegenstand der vorliegenden Erfindung ist die Verwendung eines Fettsäuretaurids der allgemeinen Formel (I),

R¹-CO-NR²-(CH₂)ₙ-SO₃⁻M⁺ (I)

in welcher
R¹ eine geradkettige oder verzweigte Alkylgruppe mit 10 bis 24, vorzugsweise mit 11 bis 13 C-Atomen ist,
R² ein Wasserstoffatom oder eine C₁-C₆-Alkylgruppe darstellt,
M⁺ ein Wasserstoff-, Ammonium-, Alkali- oder Erdalkalimetallion,
vorzugsweise Na⁺, K⁺ oder Ca⁺⁺, bedeutet und n die Zahl 1 oder 2 ist, oder einer Mischung aus mindestens zwei Fettsäuretauriden der Formel (I) zur Herstellung leicht dispergierbarer polycyclischer Pigmente aus der Klasse der Chinacridone und Dioxazine.

Als Fettsäuretauride für die erfindungsgemäße Verwendung sind insbesondere solche von Interesse, deren Fettsäurerest R¹ 11 bis 13 Kohlenstoffatome hat sowie eine Mischung solcher Fettsäuretauride.

Die erfindungsgemäß leicht dispergierbaren Pigmente aus der Klasse der Dioxazine sind beispielsweise C.I. Pigment Violet 23 (C.I. No. 51 319) der Formel 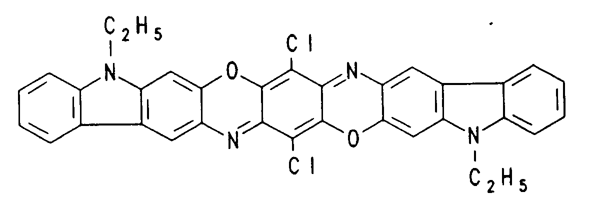
und C.I. Pigment Violet 37 (C.I. No. 51 345) der Formel 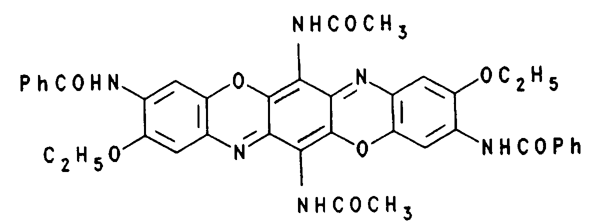
Die erfindungsgemäß leicht dispergierbaren Pigmente aus der Klasse der Chinacridone sind beispielsweise C.I. Pigment Violet 19 (C.I. No. 46 500) der Formel 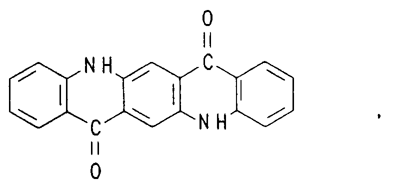
welches in der β-Phase oder γ-Phase vorliegen kann, sowie 2,9-Dimethylchinacridon, 1,8-Dichlorchinacridon, 2,9-Dichlorchinacridon, 3,10-Dichlorchinacridon und 2,9-Di-N-methylcarbonamidochinacridon.

Die Aufbringung der Fettsäuretauride kann bei verschiedenen Verfahrensstufen bei der Pigmentherstellung erfolgen.

Im Falle von Dioxazinpigmenten müssen bei der Pigmentherstellung die bei der Synthese in organischen aromatischen Lösemitteln gemäß BIOS Final Report 960, Seite 75, grobkristallin anfallenden Rohpigmente in Pigmentform überführt werden. Dies wird erreicht durch einen Feinverteilungsprozeß (Präpigmente) und nachfolgenden Finish. Feinverteilungsprozesse sind beispielsweise Naß- und Trockenmahlungen, Lösen oder Suspendieren in konzentrierten Säuren und nachträgliches Austragen in Wasser, Verküpung und Reoxidation.

Bei der Herstellung von Chinacridonpigmenten kann die Feinverteilung gemäß der DE-A-1 150 046 direkt bei der Synthese erreicht werden. Die nach der Feinverteilung vorliegenden feinteiligen Präpigmente sind noch nicht für den direkten Einsatz geeignet, sondern müssen noch einer Finishbehandlung unterzogen werden. Solche Behandlungsverfahren sind beispielsweise Nachbehandlung mit Wasser, Lösemitteln, Säuren oder Laugen, mit oder ohne Zusatz von oberflächenaktiven Mitteln, mit oder ohne Zusatz von Pigmentdispergatoren und/oder Temperaturbehandlung.

Gegenstand der Erfindung ist auch ein Verfahren zur Herstellung der genannten Pigmente, dadurch gekennzeichnet, daß man vor, während oder nach dem Finish Fettsäuretauride zugibt. Es ist auch möglich, die Fettsäuretauride während der Feinverteilung oder dem isolierten, feuchten Pigment zuzusetzen. Vorzugsweise erfolgt die Zugabe der Fettsäuretauride unmittelbar vor dem Finish, d.h. die Fettsäuretauride werden den Präpigmenten zugegeben.

Besonders bevorzugt wird so verfahren, daß man, bezogen auf das Präpigment, die ein- bis dreifache Menge Lösemittel vorlegt und dieses durch Säurezugabe ansäuert. Als Lösemittel kommen die nachfolgend genannten, für den Finish verwendeten Lösemittel in Betracht. In diese Mischung wird das Salz eines Fettsäuretaurids eingetragen und gelöst. Danach wird ein Präpigment, wie es z.B. nach den Angaben der DE-A-2 742 575 erhalten wird, eingetragen und verrührt. Nach Zugabe der 5- bis 10fachen Menge Wasser wird bei Temperaturen von 50 bis 150° C 1 bis 5 Stunden nachgerührt. Anschließend wird das Lösemittel abdestilliert und das Pigment in der üblichen Weise isoliert.

Man kann auch so verfahren, daß man die nach dem Finish und nach dem Abtrennen des Lösemittels vorliegenden wäßrigen Pigmentsuspensionen mit einer wäßrigen oder wäßrig-alkalischen Lösung eines Fettsäuretaurids versetzt und die Mischung bei Temperaturen von 50 bis 100°C 1 bis 5 Stunden nachbehandelt. Anschließend wird die Pigmentsuspension angesäuert und das Pigment in üblicher Weise isoliert.

Als Lösemittel für einen solchen Finish kommen beispielsweise in Frage: Alicyclische Kohlenwasserstoffe wie z.B. Cyclohexan; C₁-C₈-Alkanole und alicyclische Alkohole wie z.B. Methanol, Ethanol, n- oder Isopropanol, n- oder Isobutanol, tert. Butanol, Pentanole, Hexanole, Cyclohexanol; C₁-C₅-Dialkyl- oder cyclische Ketone wie z.B. Aceton, Diethylketon, Methylisobutylketon, Methylethylketon oder Cyclohexanon; Ether und Glykolether wie z.B. der Monomethyl- oder Monoethylether des Ethylen- oder Propylenglykols, Butylglykol, Ethyldiglykol oder Methoxybutanol; aromatische Kohlenwasserstoffe wie z.B. Toluol, Xylole oder Ethylbenzol, cyclische Ether wie z.B. Tetrahydrofuran, aromatische Chlorkohlenwasserstoffe wie z.B. Chlorbenzol, o-Dichlorbenzol, 1,2,4-Trichlorbenzol oder Brombenzol; substituierte Aromaten wie z.B. Benzoesäure, Nitrobenzol oder Phenol; aliphatische Carbonsäureamide wie z.B. Formamid oder Dimethylformamid; cyclische Carbonsäureamide, wie z.B. N-Methylpyrrolidon; Carbonsäure-C₁-C₄-alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester wie z.B. Benzoesäureethylester; heterocyclische Basen wie z.B. Pyridin, Morpholin oder Picolin; sowie Dimethylsulfoxid und Sulfolan.

Bevorzugte organische Lösemittel sind Alkanole, insbesondere Ethanol, Propanole, Butanole und Pentanole; aliphatische Carbonsäureamide wie Formamid oder Dimethylformamid; cyclische Carbonsäureamide, insbesondere N-Methylpyrrolidon; C₁-C₅-Dialkyl- oder cyclische Ketone, insbesondere Aceton, Diethylketon, Methylisobutylketon, Methylethylketon oder Cyclohexanon.

Ferner ist es möglich, die Fettsäuretauride in fester Form oder als wäßrige oder wäßrig-alkalische Lösung dem bereits gefinishten Pigment zuzusetzen.

Die Fettsäuretauride werden in einer Menge von 0,1 bis 10 Gew.-%, vorzugsweise 0,5 bis 5,0 Gew.-%, bezogen auf trockenes Pigment, zugesetzt.

Außer den Fettsäuretauriden können noch Pigmentdispergatoren zugesetzt werden. Geeignete Pigmentdispergatoren, die in Kombination mit den Fettsäuretauriden eingesetzt werden können, sind solche mit der allgemeinen Formel (II),

P - [X]ₘ (II)

in welcher
P für einen m-wertigen Rest eines Pigments auf Basis eines Chinacridons oder Dioxazins, vorzugsweise C.I. Pigment Violet 19 oder C.I. Pigment Violet 23, steht, worin
m eine Zahl von 1 bis 4 ist, und
X eine Gruppe der Formel (III) 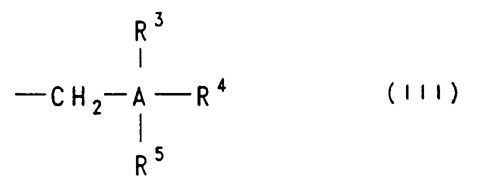
darstellt, worin A einen fünf- oder sechsgliedrigen aromatischen, gegebenenfalls kondensierten Heterocyclus darstellt, welcher 1 bis 3 gleiche oder unterschiedliche Heteroatome aus der Reihe Stickstoff, Sauerstoff oder Schwefel enthält, vorzugsweise Imidazolyl oder Indolyl, und der Heterocyclus über ein Kohlenstoffatom an die Methylengruppe gebunden ist, R³ und R⁴ ein Wasserstoffatom, eine C₁-C₄-Alkyl-, eine C₂-C₄-Alkenyl- oder eine Arylgruppe, vorzugsweise Phenylgruppe, bedeutet, wobei R³ und R⁴ gemeinsam auch einen aliphatischen oder aromatischen Ring bilden können, R⁵ ein Wasserstoffatom, eine C₁-C₄-Alkyl-, eine C₁-C₃-Hydroxyalkyl- oder eine C₂-C₄-Alkenylgruppe bedeutet, oder worin
X eine Gruppe der Formel (IV) 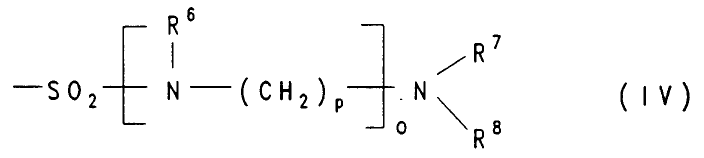
darstellt, worin R⁷ und R⁸ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁷ und R⁸ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, vorzugsweise Morpholinyl oder Pyrrolidinyl, R⁶ ein Wasserstoffatom oder eine C₁-C₄-Alkylgruppe ist, p eine Zahl von 1 bis 6, und o die Zahl 1 oder 2 ist.

Die genannten Pigmentdispergatoren werden zweckmäßigerweise in einer Menge von 0 bis 10 Gew.-%, vorzugsweise 0,5 bis 5 Gew.-%, bezogen auf das Basispigment, zugesetzt. Die Zugabe der Pigmentdispergatoren kann bei der Feinverteilung, vor, während oder nach dem Finish oder zum isolierten, feuchten Pigment erfolgen.

Die vorstehend genannten Pigmentdispergatoren sind beispielsweise beschrieben in US-PS 4,317,682, US-PS 4,310,359 und EP-A-0 321 919 (US-PS 4,986,852).

Gegenstand der vorliegenden Erfindung ist weiterhin eine Pigmentpräparation, bestehend im wesentlichen aus
a) einem Pigment aus der Klasse der Chinacridone oder Dioxazine,
b) einem oder mehreren Fettsäuretauriden der allgemeinen Formel (I),
c) und gegebenenfalls einem Pigmentdispergator der Formel (II).

Bevorzugt ist eine Pigmentpräparation, bestehend im wesentlichen aus
a) 99,9 bis 90 Gew.-%, vorzugsweise 99,5 bis 90 Gew.-%, eines Pigments aus der Klasse der Chinacridone oder Dioxazine,
b) 0,1 bis 10 Gew.-%, vorzugsweise 0,5 bis 5 Gew.-%, eines oder mehrerer Fettsäuretauride der allgemeinen Formel (I), und
c) 0 bis 9,9 Gew.-%, vorzugsweise 0,5 bis 5 Gew.-%, eines Pigmentdispergators der Formel (II).

Besonders bevorzugt sind Pigmentpräparationen, wie vorstehend genannt, enthaltend C.I. Pigment Violet 19 oder C.I. Pigment Violet 23.

Die erfindungsgemäßen Pigmentpräparationen zeigen gegenüber den unbehandelten Pigmenten eine deutlich verbesserte Dispergierbarkeit in den üblichen Anwendungsmedien. Es war überraschend und nicht vorhersehbar, daß durch den Zusatz von Fettsäuretauriden Pigmentpräparationen erhalten werden, deren Einsatzgebiete im Vergleich zu denen der unbehandelten Pigmente und denen der mit anderen oberflächenaktiven Mitteln behandelten Pigmente deutlich erweitert sind. Dadurch kann die Entwicklung mehrerer Pigmenttypen des gleichen Basispigments für verschiedene Anwendungsgebiete eingespart werden.

Die Herstellung von Chinacridon- und Dioxazinpigmentpräparationen nach dem erfindungsgemäßen Verfahren hat sich als besonders wirtschaftlich und umweltfreundlich erwiesen. Die Fettsäuretauride bleiben bei richtiger Anwendung quantitativ auf dem Pigment. Es gelangen deshalb nur sehr geringe Mengen in das Abwasser. Diese geringen Mengen werden auf Grund ihrer guten Abbaubarkeit durch eine biologische Abwasserreinigung vollständig entfernt. Außerdem werden nur geringe Mengen an Chemikalien und Lösemitteln eingesetzt, welche anschließend weiterverarbeitet oder wieder vollständig regeneriert werden können. Somit treten keine Entsorgungsprobleme auf.

Die nach der vorliegenden Erfindung erhältlichen Pigmente und Pigmentpräparationen zeichnen sich aus durch ihre hervorragenden coloristischen und rheologischen Eigenschaften, sowie eine leichte Dispergierbarkeit und ein gutes Glanzverhalten bei der Applikation in verschiedenen Medien auf dem Lack-, Druck- und Kunststoffsektor. Die erfindungsgemäß hergestellten Pigmente und Pigmentpräparationen lassen sich zum Pigmentieren von hochmolekularen organischen Materialien natürlicher oder synthetischer Herkunft einsetzen.

Hochmolekulare organische Materialien, die mit den genannten Pigmenten und Pigmentpräparationen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Verschnitt oder in Form von Präparationen oder Dispersionen zu benutzen. Bezogen auf das zu pigmentierende, hochmolekulare organische Material setzt man die erfindungsgemäßen Pigmente oder Pigmentpräparationen in einer Menge von vorzugsweise 0,1 bis 10 % ein.

Besonders geeignet sind die erfindungsgemäßen Pigmente und Pigmentpräparationen zur Anwendung in herkömmlichen Lacksystemen aus der Klasse der Alkydmelaminharzlacke und Zweikomponentenlacke auf Basis von mit Polyisocyanat vernetzbaren Alkyd- und Acrylharzen als auch in neuartigen, wäßrigen Lacken sowie in lösemittelarmen High-Solid-Lacken mit hohem Festkörperanteil.

Die erfindungsgemäß hergestellten Pigmente und Pigmentpräparationen sind in vielen Anwendungsmedien leicht und bis zu hohen Feinheiten dispergierbar. Mit ihnen lassen sich Lackierungen und Drucke von hoher Farbstärke, hohem Glanz und hoher Transparenz mit ausgezeichneten Echtheitseigenschaften erzielen.

Zur Beurteilung der Eigenschaften der nach der Erfindung hergestellten Pigmente und Pigmentpräparationen auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinussäure (kurzölig), ein High-Solid-Acrylharzeinbrennlack auf Basis einer nicht-wäßrigen Dispersion (HSS), ein Zweikomponentenlack auf Acrylharzbasis (ICA), ein mittelöliger Alkydharzlack ohne Melaminzusatz (MA4) sowie ein wäßriger Lack auf Polyurethanbasis (PUR) ausgewählt.

Zur Beurteilung der Eigenschaften der nach der Erfindung erzeugten Pigmentzubereitungen auf dem Kunststoffsektor wurde aus der Vielzahl der bekannten Kunststoffe Weichpolyvinylchlorid (PVC) ausgewählt.

Zur Beurteilung der Eigenschaften der nach der Erfindung erzeugten Pigmentzubereitungen auf dem Drucksektor wurden aus der Vielzahl der bekannten Drucksysteme ein Tiefdrucksystem auf Nitrocellulosebasis (NC-Druck) und im Offsetdruck ein Drucksystem auf Alkydharzbasis ausgewählt.

Die Bestimmung der Farbstärke und des Farbtons erfolgte nach DIN 55986. Die Rheologie des Mahlguts nach der Dispergierung (Millbase- Rheologie) wurde anhand der folgenden fünfstufigen Skala bewertet:
5 dünnflüssig
4 flüssig
3 dickflüssig
2 leicht gestockt
1 gestockt
Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt, Wesel.

In den nachstehenden Beispielen beziehen sich Teile jeweils auf Gewichtsteile und Prozente jeweils auf Gewichtsprozente.

### Beispiel 1

In einem Rührgefäß werden 900 Teile Isobutanol (85 %ig) vorgelegt und 30 Teile Ameisensäure (98 %ig) zugegeben. Zu dieser Mischung werden 4,5 Teile des Natriumsalzes eines Fettsäuretaurid-Gemisches (Wirkstoffgehalt 50 %, Rest Synthesesalz, vorwiegend Natriumsulfat) der allgemeinen Formel (I) gegeben und gelöst. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 600 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25°C gerührt. Während dieser Zeit werden noch 600 Teile Isobutanol (85 %ig) zugesetzt. Anschließend werden 3600 Teile Wasser zugegeben, 5 Stunden zum Sieden erhitzt und das Isobutanol durch Erhitzen auf 100°C am Übergang azeotrop abdestilliert. Nach dem Abkühlen auf 60°C wird das Pigment abgesaugt, mit Wasser neutral und salzfrei gewaschen und bei 80°C getrocknet.

Man erhält 438,7 Teile Pigment, das im AM-Lack transparente und farbstarke Lackierungen liefert. Die Rheologie wird mit 3 bis 4 bewertet. Die Viskosität beträgt 7,0 s und die Glanzmessung ergibt den Wert 74. Im ICA-Lack werden transparente und farbstarke Lackierungen erhalten. Die Viskosität beträgt 15,6 s und die Glanzmessung ergibt den Wert 85. Im MA4-Lack werden transparente und farbstarke Lackierungen erhalten. Die Viskosität beträgt 40,6 s und die Glanzmessung ergibt den Wert 81. Im NC-Druck werden transparente und farbstarke Drucke mit hohem Glanz erhalten. Im Offsetdruck werden Drucke mit hoher Transparenz und hoher Farbstärke erhalten. Die Fließfähigkeit der Druckfarbe ist sehr gut und die Viskosität ist niedrig. In PVC werden transparente und farbstarke Ausfärbungen erhalten. Die Dispergierbarkeit und die Ausblutechtheit sind gut.

### Beispiel 2

In einem Rührgefäß werden 150 Teile Isobutanol (85 %ig) vorgelegt und 5 Teile Ameisensäure (98 %ig) zugegeben. Zu dieser Mischung werden 3,75 Teile des Natriumsalzes eines Fettsäuretaurid-Gemisches (Wirkstoffgehalt 50 %, Rest Synthesesalz, vorwiegend Natriumsulfat) der allgemeinen Formel (I) gegeben und gelöst. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 100 Teile Präpigment von C.I. Pigment Violet 23, hergestellt gemäß der DE-PS 2 742 575, Beispiel 2 oder der US-PS 4 253 839, Beispiel 2, welches 25% Synthesesalz, vorwiegend Kochsalz, enthält, eingetragen und 20 Stunden bei 20 bis 25°C gerührt. Während dieser Zeit werden noch 100 Teile Isobutanol 85%ig zugesetzt. Anschließend werden 600 Teile Wasser zugegeben, 5 Stunden zum Sieden erhitzt und das Isobutanol durch Erhitzen auf 100°C am Übergang azeotrop abdestilliert. Nach dem Abkühlen auf 60°C wird das Pigment abgesaugt, mit Wasser neutral und salzfrei gewaschen und bei 80°C getrocknet.

Man erhält 74,1 Teile Pigment, das im PUR-Lack transparente und farbstarke Lackierungen liefert. Die Rheologie wird mit 5 bewertet. Wird ein Pigment analog Beispiel 2, jedoch ohne Zusatz des Fettsäuretaurids hergestellt, so ist die Lackierung dieses Pigments deutlich farbschwächer.

### Beispiel 3

In einem Rührgefäß werden 375 Teile Isobutanol (85%ig) vorgelegt und 12,5 Teile Ameisensäure (98%ig) zugegeben. Zu dieser Mischung werden 1,9 Teile des Natriumsalzes eines Fettsäuretaurid-Gemisches (Wirkstoffgehalt 50 %, Rest Synthesesalz, vorwiegend Natriumsulfat) der allgemeinen Formel (I) gegeben und gelöst. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 250 Teile Präpigment von C.I. Pigment Violet 23, hergestellt gemäß der DE-PS 2 742 575 Beispiel 2 oder der US-PS 4 253 839 Beispiel 2, welches 25% Synthesesalz, vorwiegend Kochsalz, enthält, eingetragen und 20 Stunden bei 20 bis 25° C gerührt. Während dieser Zeit werden noch 250 Teile Isobutanol (85%ig) zugesetzt. Anschließend werden 1500 Teile Wasser zugegeben und 5 Stunden auf 110°C unter Druck erhitzt. Nach dem Abkühlen auf 90°C wird das Isobutanol bis 100°C am Übergang azeotrop abdestilliert. Es wird auf 60°C abgekühlt, das Pigment abgesaugt, mit Wasser neutral und salzfrei gewaschen und bei 80°C getrocknet.

Man erhält 177,3 Teile Pigment, das im AM-Lack transparente und farbstarke Lackierungen liefert. Im NC-Druck werden transparente und farbstarke Drucke mit hohem Glanz erhalten. Im Offsetdruck werden Drucke mit hoher Transparenz und hoher Farbstärke erhalten. Die Fließfähigkeit der Druckfarbe ist sehr gut und die Viskosität niedrig.

### Beispiel 4

In einem Rührgefäß werden 150 Teile Isobutanol (85%ig) vorgelegt und 5 Teile Ameisensäure (98%ig) zugegeben. Zu dieser Mischung werden 1,9 Teile des Natriumsalzes eines Fettsäuretaurid-Gemisches (Wirkstoffgehalt 50 %, Rest Synthesesalz, vorwiegend Natriumsulfat) der allgemeinen Formel (I) gegeben und gelöst. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 100 Teile Präpigment von C.I. Pigment Violet 23, hergestellt gemäß der DE-PS 2 742 575, Beispiel 2 oder der US-PS 4 253 839 Beispiel 2, welches 25% Synthesesalz, vorwiegend Kochsalz, enthält, eingetragen und 20 Stunden bei 20 bis 25°C gerührt. Während dieser Zeit werden noch 100 Teile Isobutanol (85%ig) zugesetzt. Anschließend werden 600 Teile Wasser zugegeben und 5 Stunden auf 125°C unter Druck erhitzt. Nach dem Abkühlen auf 90°C wird das Isobutanol bis 100°C am Übergang azeotrop abdestilliert. Es wird auf 60°C abgekühlt, das Pigment abgesaugt, mit Wasser neutral und salzfrei gewaschen und bei 80°C getrocknet.

Man erhält 74,3 Teile Pigment, das im AM-Lack transparente und farbstarke Lackierungen liefert. Im NC-Druck werden transparente und farbstarke Drucke mit hohem Glanz erhalten.

### Beispiel 5

In einem Rührgefäß werden 100 Teile Isobutanol (85%ig) vorgelegt und 2,5 Teile des Natriumsalzes eines Fettsäuretaurid-Gemisches (Wirkstoffgehalt 50 %, Rest Synthesesalz, vorwiegend Natriumsulfat) der allgemeinen Formel (I) gegeben und gelöst. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 50 Teile entsalztes Präpigment von C.I. Pigment Violet 23, hergestellt gemäß der DE-PS 2 742 575, Beispiel 2 oder der US-PS 4 253 839 Beispiel 2, eingetragen und 20 Stunden bei 20 bis 25°C gerührt. Während dieser Zeit werden noch 65 Teile Isobutanol 85%ig zugesetzt. Anschließend wird eine Lösung aus 400 Teilen Wasser und 0,4 Teilen Calciumchlorid zugegeben, 5 Stunden zum Sieden erhitzt und das Isobutanol durch Erhitzen auf 100°C am Übergang azeotrop abdestilliert. Nach dem Abkühlen auf 60°C wird das Pigment abgesaugt, mit Wasser salzfrei gewaschen und bei 80°C getrocknet.
Man erhält 48,5 Teile Pigment, das in PVC transparente und farbstarke Ausfärbungen liefert.

### Beispiel 6

In einem Rührgefäß werden 90 Teile Isobutanol (85%ig) vorgelegt und 3 Teile Ameisensäure (98%ig) zugegeben. Danach werden 60 Teile Präpigment von C.I. Pigment Violet 23, hergestellt gemäß der DE-PS 2 742 575, Beispiel 2 oder der US-PS 4 253 839 Beispiel 2, welches 25% Synthesesalz, vorwiegend Kochsalz, enthält, eingetragen und 20 Stunden bei 20 bis 25°C gerührt. Während dieser Zeit werden noch 60 Teile Isobutanol (85%ig) zugesetzt. Anschließend werden 360 Teile Wasser zugegeben, 5 Stunden zum Sieden erhitzt und das Isobutanol durch Erhitzen auf 100°C am Übergang azeotrop abdestilliert. Nach dem Abkühlen auf 60°C wird eine Lösung aus 22 Teilen Wasser und 1,12 Teilen des Natriumsalzes eines Fettsäuretaurid-Gemisches (Wirkstoffgehalt 50%, Rest Synthesesalz, vorwiegend Natriumsulfat) der allgemeinen Formel (I) zugegeben. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 1 Stunde bei 60°C gerührt. Danach wird das Pigment abgesaugt, mit Wasser neutral und salzfrei gewaschen und bei 80°C getrocknet.
Man erhält 44,1 Teile Pigment, das im AM-Lack transparente und farbstarke Lackierungen liefert.

### Beispiel 7

In einem Rührgefäß werden 400 Teile Schwefelsäure (78%ig) vorgelegt und 40 Teile Rohpigment von C.I. Pigment Violet 23 eingetragen. Es wird auf 50°C geheizt und 5 Stunden bei dieser Temperatur gerührt. Danach wird die Suspension auf 6000 Teile Wasser gegeben, abgesaugt und neutral gewaschen. Der Filterrückstand wird in 600 Teile Wasser eingetragen, durch Zugabe von 5%iger Natronlauge auf pH 7 gestellt, abgesaugt und mit Wasser neutral gewaschen. Der Filterrückstand wird in einer Lösung aus 480 Teilen Wasser, einem Teil Ameisensäure (98%ig) und einem Teil des Natriumsalzes eines Fettsäuretaurid-Gemisches (Wirkstoffgehalt 50%, Rest Synthesesalz, vorwiegend Natriumsulfat) der allgemeinen Formel (I) suspendiert. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Danach werden 120 Teile Isobutanol (100%ig) zugegeben. Es wird 5 Stunden unter Rühren zum Sieden erhitzt und danach das Isobutanol durch Erhitzen auf 100°C am Übergang azeotrop abdestilliert. Nach dem Abkühlen auf 60°C wird das Pigment abgesaugt, mit Wasser neutral und salzfrei gewaschen und bei 80°C getrocknet.
Man erhält 39,9 Teile Pigment, das im AM-Lack farbstarke Lackierungen liefert.

### Beispiel 8

In eine Rührwerkskugelmühle vom Typ Drais PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 85,5 Teilen Wasser, 3,6 Teilen Isobutanol (100 %ig), 0,9 Teilen Natriumhydroxid und 13,6 Teilen Rohpigment von C.I. Pigment Violet 23 (74 %ig, mit 26 % Salz aus der Synthese) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper mit 42 Teilen Wasser abgespült, die Mahlgutsuspensionen vereinigt und das Isobutanol durch Erhitzen auf 100°C am Übergang azeotrop abdestilliert. Danach werden 0,25 Teile des Natriumsalzes eines Fettsäuretaurid-Gemisches (Wirkstoffgehalt 50%, Rest Synthesesalz, vorwiegend Natriumsulfat) der allgemeinen Formel (I) zugesetzt. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 1 Stunde bei 95°C gerührt, auf 70°C abgekühlt und durch Zugabe von 3,6 Teilen Ameisensäure ein pH-Wert von 3-4 eingestellt. Nach dem Abkühlen auf 60°C wird die Pigmentzubereitung abgesaugt, mit Wasser neutral und salzfrei gewaschen und bei 80°C getrocknet.
Man erhält 10,1 Teile Pigment, das im HSS-Lack farbstarke Lackierungen liefert.

### Beispiel 9

In eine Rührwerkskugelmühle, mit der in der Deutschen Patentschrift DE-PS 3 716 587 beschriebenen Ausführungsform, die mit 35,5 Teilen Zirkonmischoxidperlen vom Durchmesser 0,3-0,4 mm als Mahlkörper gefüllt ist, wird eine Suspension, bestehend aus 40 Teilen Wasser, 0,4 Teilen Natriumhydroxid und 13,6 Teilen Rohpigment von C.I. Pigment Violet 23 (74 %ig, mit 26 % Salz aus der Synthese) mit 1200 Teilen pro Stunde eindosiert und mit einer Rührwerksumfangsgeschwindigkeit von 15,6 m/s sowie einer spezifischen Leistungsdichte von 3,1 kW pro Liter Mahlraum während einer Stunde im Kreislauf bei 50 bis 55 °C gemahlen und anschließend die Mahlgutsuspension abgetrennt. Sie wird durch Zugabe von 3,6 Teilen Ameisensäure (98 %ig) auf den pH-Wert von 3-4 eingestellt. Danach werden 30 Teile Isobutanol und 0,25 Teile des Natriumsalzes eines Fettsäuretaurid-Gemisches (Wirkstoffgehalt 50%, Rest Synthesesalz, vorwiegend Natriumsulfat) der allgemeinen Formel (I) zugesetzt. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 5 Stunden bei Siedetemperatur gerührt und danach das Isobutanol durch Erhitzen auf 100°C am Übergang azeotrop abdestilliert. Nach dem Abkühlen auf 60°C wird eine Suspension aus 25 Teilen Wasser und 0,5 Teilen Pigmentdispergator der Formel (II) als 30,0 %iger wasserfeuchter Preßkuchen hinzugefügt. In dieser Formel (II) bedeutet P die Molekülstruktur von C.I. Pigment Violet 23 und X die Gruppe (III), worin A der Imidazolylrest, R³ eine Methylgruppe, R⁴ und R⁵ je ein Wasserstoffatom und m die Zahl 1 ist (Dieser Pigmentdispergator enthält noch ca. 50% unsubstituiertes C.I. Pigment Violet 23). Es wird 1 Stunde bei 60°C gerührt. Danach wird die Pigmentzubereitung abgesaugt, mit Wasser neutral und salzfrei gewaschen und bei 80°C getrocknet.
Man erhält 10,1 Teile Pigmentzubereitung, die im NC-Druck farbstarke und hochglänzende Drucke liefert. Die Viskosität und der Lösemittelverbrauch zur Einstellung der druckfähigen Farbe sind sehr niedrig.

### Beispiel 10

In einen Kunststoffbehälter, der mit 1400 Teilen cylindrischen Mahlkörpern (Cylpebs^{R}, Durchmesser 12 mm, Hersteller: Groh GmbH, Hof) als Mahlkörper zu 90 Vol% gefüllt ist, werden nacheinander 30 Teile Rohpigment von C.I. Pigment Violet 23 (74 %ig, mit 26 % Salz aus der Synthese) und 1,11 Teile des Natriumsalzes eines Fettsäuretaurid-Gemisches (Wirkstoffgehalt 50%, Rest Synthesesalz, vorwiegend Natriumsulfat) der allgemeinen Formel (I) eingebracht.

In dieser Formel (I) bedeutet R¹ einen Alkylrest eines natürlichen Fettsäuregemisches mit 11 bis 13 C-Atomen, R² ein Wasserstoffatom und M⁺ ein Natriumion. Die Mischung wird 4 Stunden lang unter Schütteln auf einer Schwingmühle (Typ Vibratom; Hersteller: Siebtechnik Mühlheim) fein vermahlen. Danach wird das Mahlgut von den Mahlkörpern abgesiebt. Man erhält 27,3 Teile Mahlgut.

In einem Rührgefäß werden 37,5 Teile Isobutanol (85%ig) vorgelegt und 1,25 Teile Ameisensäure (98%ig) zugegeben. Danach werden 25 Teile des obigen Mahlguts eingetragen und 20 Stunden bei 20-25°C gerührt. Während dieser Zeit werden noch 50 Teile Isobutanol (85%ig) zugesetzt. Anschließend werden 150 Teile Wasser zugegeben, 5 Stunden zum Sieden erhitzt und das Isobutanol durch Erhitzen auf 100° C am Übergang azeotrop abdestilliert. Nach dem Abkühlen auf 60° C wird das Pigment abgesaugt, mit Wasser neutral und salzfrei gewaschen und bei 80° C getrocknet.
Man erhält 17,8 Teile Pigment, das im AM-Lack transparente und farbstarke Lackierungen liefert.

### Beispiel 11

In einem Rührgefäß werden 500 Teile Wasser vorgelegt und 40 Teile Pigment (C.I.Pigment Violet 19, β-Phase), hergestellt gemäß der DE-A-1 150 046, in Form des feuchten Filterkuchens eingetragen und suspendiert. Danach wird auf 50°C geheizt und bei dieser Temperatur eine Lösung aus 9 Teilen Wasser und 1 Teil des Natriumsalzes eines Fettsäuretaurids (Wirkstoffgehalt 50%, Rest Synthesesalz, vorwiegend Natriumsulfat) der allgemeinen Formel (I) zugegeben. In dieser Formel (I) bedeutet R¹ einen Alkylrest eines natürlichen Fettsäure-Gemisches mit 11 bis 13 C-Atomen, R² ein Wasserstoffatom und M⁺ ein Natriumion. Es wird 2 Stunden bei 50°C gerührt, danach durch Zugabe von 1%ger Salzsäure auf pH 1 gestellt, 1 Stunde gerührt, abgesaugt, mit Wasser neutral und salzfrei gewaschen und bei 80°C getrocknet.
Man erhält 39,8 Teile Pigment, das im AM-Lack transparente und farbstarke Lackierungen liefert.

### Beispiel 12

In einem Rührgefäß wird eine Suspension aus 225 Teilen Wasser, 225 Teilen Ethanol, 2,25 Teilen Natriumhydroxid und 40 Teilen Pigment (C.I. Pigment Violet 19, β-Phase), hergestellt nach den Angaben der DE-A-1 150 046, vorgelegt. In diese Suspension werden nacheinander 0,5 Teile des Natriumsalzes eines Fettsäuretaurids (Wirkstoffgehalt 50%, Rest Synthesesalz, vorwiegend Natriumsulfat) der allgemeinen Formel (I), in welcher R¹ einen Alkylrest eines natürlichen Fettsäuregemisches mit 11 bis 13 C-Atomen, R² ein Wasserstoffatom und M⁺ ein Natriumion bedeutet und 2 Teile Pigmentdispergator der Formel (II), in der P für den Chinacridonrest steht, X die Gruppe (IV) ist, worin R⁶ ein Wasserstoffatom und R⁷ und R⁸ jeweils eine Methylgruppe bedeutet und p die Zahl 3 und o die Zahl 2 ist, zugegeben. Danach werden 500 Teile Wasser zugegeben und das Ethanol bis 100°C am Übergang abdestilliert. Anschließend wird durch Zugabe von 1%iger Schwefelsäure pH 1 eingestellt, 1 Stunde nachgerührt, abgesaugt, mit Wasser neutral und salzfrei gewaschen und bei 80° C getrocknet.
Man erhält 41,5 Teile Pigmentzubereitung, die im AM-Lack transparente und farbstarke Lackierungen liefert. Die Rheologie wird mit 5 bewertet und der Glanz beträgt 81.

### Beispiel 13

In einem Rührgefäß werden 500 Teile Wasser vorgelegt und 40 Teile Pigment von C.I. Pigment Violet 19, γ-Phase, hergestellt gemäß der DE-PS 1 184 881, in Form des feuchten Filterkuchens eingetragen und suspendiert. Danach wird auf 50°C geheizt und bei dieser Temperatur eine Lösung aus 9 Teilen Wasser und 0,8 Teilen des Natriumsalzes eines Fettsäuretaurids (Wirkstoffgehalt 50 %, Rest Synthesesalz, vorwiegend Natriumsulfat) der allgemeinen Formel (I) zugegeben. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 2 Stunden bei 50°C gerührt, danach durch Zugabe von 1 %iger Salzsäure auf pH 1 gestellt, 1 Stunde gerührt, abgesaugt, mit Wasser neutral und salzfrei gewaschen und bei 80°C getrocknet.
Man erhält 41,0 Teile Pigment, das im AM-Lack transparente und farbstarke Lackierungen liefert.

### Beispiel 14

In einem Rührgefäß werden 500 Teile Wasser vorgelegt und 40 Teile Pigment von 2,9-Dimethylchinacridon, hergestellt gemäß der DE-PS 1 261 106, in Form des feuchten Filterkuchens eingetragen und suspendiert. Danach wird auf 50°C geheizt und bei dieser Temperatur eine Lösung aus 9 Teilen Wasser und 0,4 Teilen des Natriumsalzes eines Fettsäuretaurids (Wirkstoffgehalt 50 %, Rest Synthesesalz, vorwiegend Natriumsulfat) der allgemeinen Formel (I) zugegeben. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 2 Stunden bei 50°C gerührt, danach durch Zugabe von 1 %iger Salzsäure auf pH 1 gestellt, 1 Stunde gerührt, abgesaugt, mit Wasser neutral und salzfrei gewaschen und bei 80°C getrocknet.
Man erhält 38,3 Teile Pigment, das im AM-Lack transparente und farbstarke Lackierungen liefert.

### Beispiel 15

In einem Rührgefäß werden 500 Teile Wasser vorgelegt und 40 Teile Pigment von 1,8-Dichlorchinacridon, hergestellt gemäß der DE-PS 1 261 106, in Form des feuchten Filterkuchens eingetragen und suspendiert. Danach wird auf 50°C geheizt und bei dieser Temperatur eine Lösung aus 9 Teilen Wasser und 1 Teil des Natriumsalzes eines Fettsäuretaurids (Wirkstoffgehalt 50 %, Rest Synthesesalz, vorwiegend Natriumsulfat) der allgemeinen Formel (I) zugegeben. In dieser Formel (I) bedeutet R¹ einen Alkylrest eines natürlichen Fettsäuregemisches mit 11 bis 13 C-Atomen, R² ein Wasserstoffatom und M⁺ ein Natriumion. Es wird 2 Stunden bei 50°C gerührt, danach durch Zugabe von 1 %iger Salzsäure auf pH 1 gestellt, 1 Stunde gerührt, abgesaugt, mit Wasser neutral und salzfrei gewaschen und bei 80°C getrocknet.
Man erhält 38,9 Teile Pigment, das im AM-Lack transparente und farbstarke Lackierungen liefert.

## Patentansprüche

1. Verwendung eines Fettsäuretaurids der allgemeinen Formel (I)
R¹-CO-NR²⁻(CH₂)ₙ-SO₃⁻M⁺ (I)
in welcher
R¹ eine geradkettige oder verzweigte Alkylgruppe mit 10 bis 24 Kohlenstoffatomen und
R² ein Wasserstoffatom oder eine C₁-C₆-Alkylgruppe darstellen,
M⁺ ein Wasserstoff-, Ammonium-, Alkali- oder Erdalkalimetallion bedeutet und n die Zahl 1 oder 2 ist, oder einer Mischung aus mindestens zwei Fettsäuretauriden der Formel (I) zur Herstellung leicht dispergierbarer polycyclischer Pigmente aus der Klasse der Chinacridone und Dioxazine.

2. Verwendung nach Anspruch 1, dadurch gekennzeichnet, daß Fettsäuretauride oder ein Gemisch von Fettsäuretauriden, deren Reste R¹ Alkylreste mit 11 bis 13 Kohlenstoffatomen sind, eingesetzt werden.

3. Verwendung nach Anspruch 1 oder 2, dadurch gekennzeichnet, daß die polycyclischen Pigmente C.I. Pigment Violet 19 oder C.I. Pigment Violet 23 sind.

4. Pigmentpräparation, bestehend im wesentlichen aus
a) einem Pigment aus der Klasse der Chinacridone oder Dioxazine,
b) einem oder mehreren der Fettsäuretauride der allgemeinen Formel (I) gemäß Anspruch 1, und
c) gegebenenfalls einem Pigmentdispergator der Formel (II)
P - [X]ₘ (II)
in welcher
P für einen m-wertigen Rest eines Pigments auf Basis eines Chinacridons oder Dioxazins, vorzugsweise C.I. Pigment Violet 19 oder C.I. Pigment Violet 23, steht, worin
m eine Zahl von 1 bis 4 ist, und
X eine Gruppe der Formel (III) 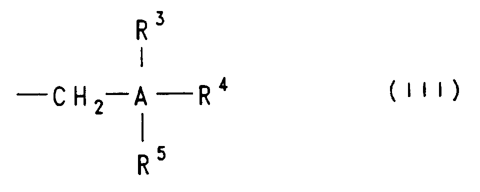 darstellt, worin A einen fünf- oder sechsgliedrigen aromatischen, gegebenenfalls kondensierten Heterocyclus darstellt, welcher 1 bis 3 gleiche oder unterschiedliche Heteroatome aus der Reihe Stickstoff, Sauerstoff oder Schwefel enthält, vorzugsweise Imidazolyl oder Indolyl, und der Heterocyclus über ein Kohlenstoffatom an die Methylengruppe gebunden ist, R³ und R⁴ ein Wasserstoffatom, eine C₁-C₄-Alkyl-, eine C₂-C₄-Alkenyl- oder eine Arylgruppe, vorzugsweise Phenylgruppe, bedeuten, wobei R³ und R⁴ gemeinsam auch einen aliphatischen oder aromatischen Ring bilden können, R⁵ ein Wasserstoffatom, eine C₁-C₄-Alkyl-, eine C₁-C₃-Hydroxyalkyl- oder eine C₂-C₄-Alkenylgruppe bedeutet, oder worin
X eine Gruppe der Formel (IV) 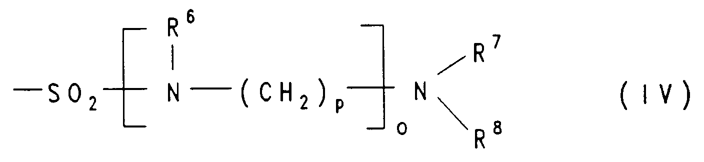 darstellt, worin R⁷ und R⁸ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁷ und R⁸ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, vorzugsweise Morpholinyl oder Pyrrolidinyl, R⁶ ein Wasserstoffatom oder eine C₁-C₄-Alkylgruppe ist, p eine Zahl von 1 bis 6 und o die Zahl 1 oder 2 ist.

5. Pigmentpräparation gemäß Anspruch 4, bestehend im wesentlichen aus
a) 99,9 bis 90 Gew.-%, vorzugsweise 99,5 bis 90 Gew.-%, eines Pigments aus der Klasse der Chinacridone oder Dioxazine,
b) 0,1 bis 10 Gew.-%, vorzugsweise 0,5 bis 5 Gew.-%, eines oder mehrerer Fettsäuretauride der allgemeinen Formel (I), und
c) 0 bis 9,9 Gew.-%, vorzugsweise 0,5 bis 5 Gew.-%, eines Pigmentdispergators der Formel (II).

6. Pigmentpräparation nach Anspruch 4 oder 5, dadurch gekennzeichnet, daß das Pigment C.I. Pigment Violet 19 ist.

7. Pigmentpräparation nach Anspruch 4 oder 5, dadurch gekennzeichnet, daß das Pigment C.I. Pigment Violet 23 ist.

8. Verfahren zur Herstellung einer Pigmentpräparation nach mindestens einem der Ansprüche 4 bis 7, dadurch gekennzeichnet, daß man vor, während oder nach dem Finish das Fettsäuretaurid(gemisch) in einer Menge von 0,1 bis 10 Gew.-%, vorzugsweise 0,5 bis 5 Gew.-%, bezogen auf trockenes Pigment, zugibt.

9. Verfahren nach Anspruch 8, dadurch gekennzeichnet, daß man das Fettsäuretaurid(gemisch) unmittelbar vor dem Finish zugibt.

10. Verfahren nach Anspruch 8 oder 9, dadurch gekennzeichnet, daß man den Pigmentdispergator der Formel (II) während der Feinverteilung, vor, während oder nach dem Finish oder zum isolierten, feuchten Pigment zugibt.

11. Verwendung einer Pigmentpräparation gemäß mindestens einem der Ansprüche 4 bis 7 als Farbmittel zum Pigmentieren von Lacken, Druckfarben oder Kunststoffen.
